# EUROPÄISCHE PATENTSCHRIFT

(11) **EP 3 031 042 B1**
(45) Veröffentlichungstag und Bekanntmachung des Hinweises auf die Patenterteilung: **06.06.2018**
(21) Anmeldenummer: 14746962.1
(22) Anmeldetag: 01.08.2014
(51) Int. Cl.: G01C 21/26, G01S 19/13, G08G 1/127, G08G 1/00, G08G 1/005

(54) **VERFAHREN ZUM BEREITSTELLEN VON MINDESTENS EINER POSITIONSINFORMATION ÜBER EIN GEPARKTES KRAFTFAHRZEUG UND KRAFTFAHRZEUG**
METHOD FOR MAKING AVAILABLE AT LEAST ONE POSITION INFORMATION ITEM ABOUT A PARKED MOTOR VEHICLE AND MOTOR VEHICLE
PROCÉDÉ DE PRODUCTION D'AU MOINS UNE INFORMATION DE POSITION D'UN VÉHICULE AUTOMOBILE EN STATIONNEMENT ET VÉHICULE AUTOMOBILE

(30) Priorität: 09.08.2013 DE 102013013329
(43) Veröffentlichungstag der Anmeldung: 15.06.2016
(73) Patentinhaber: Audi AG, 85045 Ingolstadt (DE)
(72) Erfinder: LACHER, Peter, 85049 Ingolstadt (DE)
(74) Vertreter: Bauer, Dominik Michael
(86) Internationale Anmeldenummer: PCT/EP2014/002131
(87) Internationale Veröffentlichungsnummer: WO 2015/018513

(56) Entgegenhaltungen:
- EP-A1- 2 088 569
- DE-A1- 10 307 327
- DE-A1- 19 923 750
- DE-A1-102004 043 177
- DE-A1-102005 041 958
- DE-A1-102010 056 529
- DE-A1-102011 101 359
- DE-A1-102011 118 234
- FR-A1- 2 756 083
- KR-A- 20130 083 087
- US-A1- 2007 279 283
- US-A1- 2009 251 333

## Beschreibung

Die Erfindung betrifft ein Verfahren zum Bereitstellen mindestens einer Positionsinformation über ein geparktes Kraftfahrzeug gemäß dem Oberbegriff des Patentanspruchs 1 sowie ein Kraftfahrzeug gemäß dem Oberbegriff des Patentanspruchs 10.

Heutige Systeme - oft Car Finder genannt - erlauben es dem Benutzer über sein Mobiltelefon die Position seines Fahrzeugs zu lokalisieren und zu speichern. Dabei gibt es verschiedene Ausprägungen, wie dieser Schritt vom Mobiltelefon ausgeführt wird. Manche Systeme müssen manuell vom Benutzer gestartet werden, andere wiederum nutzen die Sensorik des Mobiltelefons. Dabei besteht der Nachteil, dass die Systeme sich rein auf die Geo-Koordinaten des Mobiltelefons stützen. Ist keine Geoinformation vorhanden, z.B. in einem großen Parkhaus, kann keine verlässliche Parkplatz-Erinnerungsinformation angelegt werden. Gerade beim Parken in Parkhäusern besteht dabei das Problem, dass nicht immer ausreichend Empfang, z.B. für einen GPS-Empfänger, bereitsteht, um die Parkposition bestimmen zu können. Darüber hinaus bestehen Parkhäuser normalerweise aus mehreren Ebenen, was eine genaue Positionsbestimmung und das Auffinden des Fahrzeugs zusätzlich erschwert.

Die DE 10 2004 043 177 A1 beschreibt eine Anordnung zum Auffinden von geparkten Fahrzeugen. Die Anordnung umfasst dabei ein Mobiltelefon mit einer Navigationseinheit mit Positionsbestimmungseinheit. Dabei detektiert eine im Fahrzeug angeordnete Parkdetektionsschaltung eine Parksituation und übermittelt die durch einen GPS-Empfänger bereitgestellte Parkposition an das Mobiltelefon. Das Mobiltelefon kann daraufhin den Benutzer von der aktuellen Position des Mobiltelefons zur übermittelten Parkposition des Fahrzeugs führen. Doch auch hierbei besteht das Problem, dass gerade im Falle eines Parkens in einem Parkhaus nicht immer ein ausreichender GPS-Empfang gegeben ist, um die Parkposition zu ermitteln.

Weiterhin beschreibt die EP 2 088 569 A1 ein Verfahren zur Erfassung und Anzeige von parkhausrelevanten Informationen. Die Stellplatzinformation eines Fahrzeugs in einem Parkhaus kann mittels RFID-Interaktion in einem Mobiltelefon gespeichert werden. Das Mobiltelefon muss dazu RFID-fähig ausgebildet sein. Weiterhin muss dazu an jedem Stellplatz eines Parkhauses ein Smartposter mit einem RFID-Label angebracht sein. Nachteilig dabei ist, dass nicht jedes Parkhaus an den Stellplätzen RFID-Label aufweist, so dass dieses Verfahren nur für die wenigsten Parkhäuser geeignet ist.

Des Weiteren beschreibt die DE 10 2010 056 529 ein gattungsgemäßes Verfahren zum Bereitstellen einer Positionsinformation eines geparkten Kraftfahrzeugs. Dabei wird ein Einfahren des Kraftfahrzeugs in ein Parkhaus detektiert und die aktuelle Position beim Einfahren gespeichert. Die genaue Position des Fahrzeugs im Parkhaus wird durch fahrzeugeigene Sensoren zur Ermittlung der Wegstrecke ermittelt. Nach dem Parken des Fahrzeugs wird die Positionsinformation angezeigt. Dabei können auch die Parketage und die Parkplatznummer aufgeführt sein, falls die Daten einem Positionserkennungsmodul zur Verfügung stehen. Die Anzeige kann auch auf einem mobilen Kommunikationsgerät erfolgen, das über eine Schnittstelle mit dem Fahrzeug verbunden ist.

Dieses Verfahren, wie auch die bereits zuvor genannten Verfahren und Systeme, haben dabei weiterhin den Nachteil, dass ein Mobiltelefon eine zentrale Funktion übernimmt, zum Teil zur Ermittlung und Speicherung der Positionsinformation selbst, sowie auch zur Wiedergabe der Parkplatzinformation. Hat der Nutzer kein Mobiltelefon dabei oder verliert dieses auf seiner Reise, kann die Funktion nicht genutzt werden.

Die US 2009/0251333 A1 beschreibt ein Verfahren zur Assistenz zum Auffinden eines geparkten Kraftfahrzeugs, bei dem eine Positionsbestimmungseinrichtung des Kraftfahrzeugs bestimmt, wenn das Kraftfahrzeugs in ein Parkhaus einfährt und eine Kamera des Kraftfahrzeugs ab dem Einfahren des Kraftfahrzeugs in das Parkhaus Bilder aufnimmt, welche gespeichert werden. Die aufgenommenen Bilder können dann an ein mobiles Kommunikationsgerät des Benutzers entweder direkt übermittelt werden oder indirekt zunächst an einen vorbestimmten Server und von diesem an das mobile Kommunikationsgerät. Die Positionsbestimmungseinrichtung kann dabei mit einem GPS-Empfänger gekoppelt sein, um das Einfahren des Kraftfahrzeugs in ein Parkhaus zu detektieren und dadurch das Aufnehmen und Speichern der Bilder zu veranlassen.

Die DE 199 23 750 A1 beschreibt ein Verfahren, gemäß welchem spätestens beim Parkvorgang die Information über den aktuellen Standort des Fahrzeugs, die ein Navigationssystem an Bord des Fahrzeugs gewinnt, auf ein mobiles Terminal, das der Fahrer mit sich führen kann, wenn er sein Fahrzeug verlässt, übertragen und dort abgespeichert werden kann. Anstelle einer unmittelbaren Speicherung im mobilen Terminal ist auch die Speicherung der Informationen über den Parkstandort in einem entfernten Zwischenspeicher, auf den das mobile Terminal Zugriff hat, möglich.

Aufgabe der vorliegenden Erfindung ist es daher, ein Verfahren zum Bereitstellen mindestens einer Positionsinformation über ein geparktes Kraftfahrzeug und ein Kraftfahrzeug bereitzustellen, mittels welchen bei einem Parken in einem Parkhaus auf möglichst zuverlässige Weise eine Positionsinformation bereitgestellt werden kann.

Diese Aufgabe wird gelöst durch ein Verfahren zum Bereitstellen mindestens einer Positionsinformation über ein geparktes Kraftfahrzeug sowie durch ein Kraftfahrzeug gemäß den unabhängigen Ansprüchen.

Vorteilhafte Ausgestaltungen der Erfindung finden sich in den abhängigen Ansprüchen.

Beim erfindungsgemäßen Verfahren zum Bereitstellen von mindestens einer Positionsinformation über ein geparktes Kraftfahrzeug, das eine Kommunikationseinrichtung und eine Positionsbestimmungseinrichtung aufweist, wird ein Einfahren des Kraftfahrzeugs in ein Parkhaus durch eine Detektionseinrichtung des Kraftfahrzeugs detektiert und mindestens eine aktuelle erste Positionsinformation des Kraftfahrzeugs als Geo-Koordinaten und/oder GPS-Koordinaten durch die Positionsbestimmungseinrichtung des Kraftfahrzeugs ermittelt. Des Weiteren wird durch das Detektieren des Einfahrens ein Senden der mindestens einen von der Positionsbestimmungseinrichtung des Kraftfahrzeugs bereitgestellten, aktuellen ersten Positionsinformation durch die Kommunikationseinrichtung des Kraftfahrzeugs an eine fahrzeugexterne zentrale Datenverarbeitungseinrichtung ausgelöst. Weiterhin wird im Falle eines Empfangens der ersten Positionsinformation durch die zentrale Datenverarbeitungseinrichtung die mindestens eine erste Positionsinformation durch die zentrale Datenverarbeitungseinrichtung gespeichert.

Dadurch, dass das Detektieren des Einfahrens in ein Parkhaus gleichzeitig das Senden der ersten Positionsinformation auslöst, ist die Wahrscheinlichkeit groß, dass diese Positionsinformation auch erfolgreich an die zentrale Datenverarbeitungseinrichtung übermittelt werden kann, denn zum Zeitpunkt des Sendens befindet sich das Kraftfahrzeug somit noch einem Eingangs- oder Einfahrtsbereich des Parkhauses, in welchem üblicherweise ausreichend Empfang für eine drahtlose Übermittlung der Positionsinformation an die zentrale Datenverarbeitungseinrichtung gegeben ist. Dabei kann die Positionsinformation beispielsweise über Internet, insbesondere mittels WLAN, an die zentrale Datenverarbeitungseinrichtung übermittelt werden. Besonders vorteilhaft beim erfindungsgemäßen Verfahren ist weiterhin, dass durch die Speicherung der ersten Positionsinformation auf der fahrzeugexternen zentraler Datenverarbeitungseinrichtung die erste Positionsinformation einem Benutzer unabhängig von einem Mitführen eines Handys oder Smartphones bereitgestellt werden kann. Hat ein Benutzer beispielsweise kein eigenes Handy oder hat dieses vergessen, so kann er die erste Positionsinformation, wenn er diese benötigt, auch von einem anderen Handy aus abrufen, oder nachdem ihm sein eigenes Handy wieder zur Verfügung steht. Weiterhin kann er die Information auch von zu Hause aus von einem Heimrechner oder einem PDA, Laptop, Tablet PC, usw., abrufen, insbesondere durch jedes Gerät, welches zur einer Kommunikation mit der zentralen Datenverarbeitungseinrichtung befähigt ist. Darüber hinaus hat dies auch große Vorteile, wenn beispielsweise ein Kraftfahrzeug von mehreren Personen benutzt wird. Dann kann z.B. eine Person, welche das Kraftfahrzeug nicht geparkt hat und nicht weiß, wo dieses geparkt ist, von jedem Gerät die erste Positionsinformation von der zentralen Datenverarbeitungseinrichtung abrufen.

Die erste Positionsinformation kann dabei in Form von Geo-Koordinaten bereitgestellt sein und durch das Fahrzeug beispielsweise mittels eines GPS-Empfängers ermittelt worden sein. Üblicherweise ist ein GPS-Empfänger in jedem Navigationsgerät verbaut, so dass dieses Verfahren auch besonders kostengünstig ist, da dafür üblicherweise bereits im Kraftfahrzeug verbaute Komponenten genutzt werden können. Auch die Detektion des Einfahrens in ein Parkhaus kann z.B. Kartendaten eines Navigationsgeräts des Kraftfahrzeugs entnommen werden, wenn das Parkhaus in diesen als solches kenntlich gemacht ist. Auch dies ermöglicht eine besonders kostengünstige Ausgestaltung des Verfahrens. Alternativ oder zusätzlich kann zur Detektion des Einfahrens in ein Parkhaus eine entsprechende Sensorik am Kraftfahrzeug vorgesehen sein, wobei z.B. ebenfalls bereits im Kraftfahrzeug verbaute Sensoren genutzt werden können.

Bei einer vorteilhaften Ausgestaltung der Erfindung wird in einem weiteren Schritt eine Eingabeaufforderung zum Eingeben mindestens einer zweiten Positionsinformation durch das Kraftfahrzeug an einen Benutzer ausgegeben. Dabei kann der Benutzer bevorzugt als zweite Positionsinformation eine Parkebene und/oder eine Stellplatznummer des Parkplatzes des Kraftfahrzeugs eingeben. Denkbar wären auch andere Positionsinformationen über den Parkplatz. Somit kann auf besonders einfache, kostengünstige und zuverlässige Weise auch eine Information über den genauen Standort des Kraftfahrzeugs im Parkhaus bereitgestellt werden.

Bei einer vorteilhaften Ausgestaltung der Erfindung wird in einem weiteren Schritt die mindestens eine zweite Positionsinformation an die zentrale Datenverarbeitungseinrichtung gesendet, falls von einem Benutzer die mindestens eine zweite Positionsinformation eingegeben worden ist. Des Weiteren kann die mindestens eine zweite Positionsinformation durch die zentrale Datenverarbeitungseinrichtung gespeichert werden, falls von der zentralen Datenverarbeitungseinrichtung die mindestens eine zweite Positionsinformation empfangen worden ist. Somit kann auch die zweite Positionsinformation, insbesondere der genaue Standort des Kraftfahrzeugs, zentral abruffähig bereitgestellt werden, insbesondere wiederum ohne, dass ein Handy oder Smartphone vom Benutzer erforderlich ist. Sollte der Benutzer dennoch ein mobiles Kommunikationsgerät mit sich führen, so stehen weitere besonders vorteilhafte Ausgestaltungen bereit, die die Bereitstellung der Positionsinforationen über das Kraftfahrzeug noch zuverlässiger machen.

Beispielsweise kann es als weitere Ausgestaltung vorgesehen sein, dass, falls von einem mobilen Kommunikationsgerät ein Auslöseereignis detektiert wird, eine kommunikative Verbindung durch das mobile Kommunikationsgerät zur zentralen Datenverarbeitungseinrichtung hergestellt wird. Das Auslöseereignis kann dabei ein Trennen einer Kommunikationsverbindung zwischen dem mobilen Kommunikationsgerät und dem Kraftfahrzeug sein, z.B. das Entkoppeln von einer Freisprecheinrichtung. Das Auslöseereignis kann dabei auch ein Erkennen durch das mobile Kommunikationsgerät sein, dass die Verbindung des mobilen Kommunikationsgeräts vom fahrzeugseitigen WLAN getrennt wurde. Diese Ausgestaltungen des Auslöseereignisses setzen dabei voraus, dass vorher eine kommunikative Kopplung des mobilen Kommunikationsgeräts mit dem Kraftfahrzeug bestanden hat, was weitere vorteilhafte Ausgestaltungen ermöglicht.

Die kommunikative Verbindung zwischen dem mobilen Kommunikationsgerät und der zentralen Datenverarbeitungseinrichtung ermöglicht den weiteren vorteilhaften Schritt einer Ausgestaltung der Erfindung, in dem durch das mobile Kommunikationsgerät überprüft wird, ob die erste und die zumindest eine zweite Positionsinformation von der zentralen Datenverarbeitungseinrichtung gespeichert wurden. Auf vorteilhafte Weise wird dieser Überprüfungsschritt durch das Auslöseereignis automatisch eingeleitet und kann somit nicht von einem Benutzer vergessen werden. Zudem stellt dies eine besonders hohe Zuverlässigkeit des Verfahrens bereit, da so erkannt werden kann, ob alle Sendevorgänge erfolgreich waren. Ist dies nämlich nicht der Fall, so können entsprechende weitere vorteilhafte Schritte eingeleitet werden.

Bei einer Ausgestaltung der Erfindung kann dann eine Eingabeaufforderung zum Eingeben der mindestens einen zweiten Positionsinformation durch das mobile Kommunikationsgerät an den Benutzer ausgegeben werden, falls durch das mobile Kommunikationsgerät festegestellt wird, dass zumindest die mindestens eine zweite Positionsinformation nicht von der zentralen Datenverarbeitungseinrichtung gespeichert wurde. Dies ermöglicht dem Benutzer erneut die zweite Positionsinformation einzugeben.

Falls durch den Benutzer die mindestens eine zweite Positionsinformation eingegeben wird, kann die mindestens eine zweite Positionsinformation durch das mobile Kommunikationsgerät an die zentrale Datenverarbeitungseinrichtung gesendet werden. Besonders von Vorteil ist dabei, dass durch ein mobiles Kommunikationsgerät beispielsweise eine andersartige Kommunikationsverbindung zur zentralen Datenverarbeitungseinrichtung hergestellt werden kann, z.B. über Mobilfunk, als durch das Kraftfahrzeug. Somit erhöht sich die Wahrscheinlichkeit, dass zumindest eine dieser kommunikativen Verbindungsmöglichkeiten empfangsbedingt erfolgreich ist. Ein weiterer Vorteil ist zudem, dass das mobile Kommunikationsgerät beim Verlassen des Fahrzeugs und auch des Parkhauses vom Benutzer üblicherweise mitgeführt wird, so dass spätestens beim Verlassen des Parkhauses durch das mobile Kommunikationsgerät eine erfolgreiche Verbindung aufgebaut werden kann. Somit kann mit sehr hoher Wahrscheinlichkeit und damit äußerst zuverlässig die genaue Position des Kraftfahrzeugs durch die zentrale Datenverarbeitungseinrichtung gespeichert werden.

Alternativ zur zusätzlichen Benutzereingabe der zweiten Positionsinformation mittels des mobilen Kommunikationsgeräts kann es auch vorgesehen sein, dass, falls von einem Benutzer die mindestens eine zweite Positionsinformation im Kraftfahrzeug eingegeben wird, diese durch das Kraftfahrzeug an das mobile Kommunikationsgerät übermittelt wird. Dazu kann beispielsweise die für das Bereitstellen des oben genannten Auslöseereignisses erforderliche kommunikative Kopplung zwischen dem Kraftfahrzeug und dem mobilen Kommunikationsgerät auf vorteilhafte Wiese genutzt werden. Weiterhin kann dann die an das mobile Kommunikationsgerät übermittelte mindestens einen zweiten Positionsinformation durch das mobile Kommunikationsgerät an die zentrale Datenverarbeitungseinrichtung gesendet werden, falls durch das mobile Kommunikationsgerät beim Überprüfen festgestellt worden ist, dass zumindest die mindestens eine zweite Positionsinformation nicht von der zentralen Datenverarbeitungseinrichtung gespeichert wurde. Somit muss der Benutzer vorteilhafterweise die zweite Positionsinformation nicht nochmal eingeben.

Das erfindungsgemäße Kraftfahrzeug umfasst eine Positionsbestimmungseinrichtung, die dazu ausgelegt ist, eine aktuelle erste Positionsinformation des Kraftfahrzeugs als Geo-Koordinaten und/oder GPS-Koordinaten zu bestimmen, eine Detektionseinrichtung, die dazu ausgelegt ist, ein Einfahren des Kraftfahrzeugs in ein Parkhaus zu detektieren, und eine Kommunikationseinrichtung. Dabei ist die Kommunikationseinrichtung mit der Detektionseinrichtung und der Positionsbestimmungseinrichtung gekoppelt. Weiterhin ist die Kommunikationseinrichtung dazu ausgelegt, eine kommunikative Verbindung zu einer fahrzeugexternen zentralen Datenverarbeitungseinrichtung herzustellen und bei einer Detektion eines Einfahrens des Kraftfahrzeugs in ein Parkhaus ein Senden der aktuellen ersten Positionsinformation an die zentrale Datenverarbeitungseinrichtung zu veranlassen.

Die für das erfindungsgemäße Verfahren und seine Ausgestaltungen genannten Verfahrensmerkmale ermöglichen dabei die Weiterbildung des erfindungsgemäßen Kraftfahrzeugs durch weitere gegenständliche Merkmale, wobei insbesondere die auf das Kraftfahrzeug bezogenen und beschriebenen Verfahrensschritte die gegenständlichen Mittel zum Durchführen dieser Schritte implizieren. Weiterhin gelten die für das erfindungsgemäße Verfahren und seine Ausgestaltungen genannten Merkmale und Merkmalskombinationen und deren Vorteile gelten in gleicher Weise, soweit anwendbar, für das erfindungsgemäße Kraftfahrzeug.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Nachfolgend werden bevorzugte Ausführungsformen der Erfindung unter Bezug auf die Zeichnung näher beschrieben. Dabei zeigen:
- Fig. 1: eine schematische Darstellung eines Kraftfahrzeugs gemäß einem Ausführungsbeispiel der Erfindung zum Bereitstellen einer Positionsinformation an einer zentralen Datenverarbeitungseinrichtung;
- Fig. 2: eine schematische Darstellung eines Ablaufdiagramms zur Veranschaulichung von Verfahrensschritten gemäß einem Ausführungsbeispiel der Erfindung; und

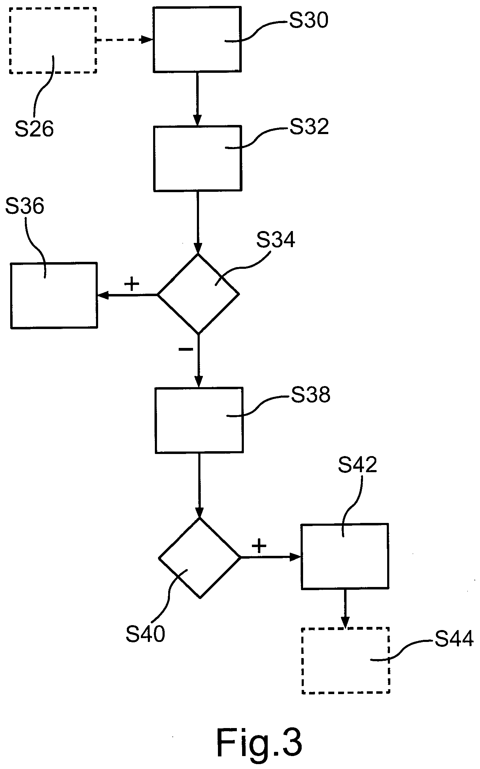

- Fig. 3: eine schematische Darstellung eines Ablaufdiagramms zur Veranschaulichung von weiteren Verfahrensschritten gemäß einem Ausführungsbeispiel der Erfindung.

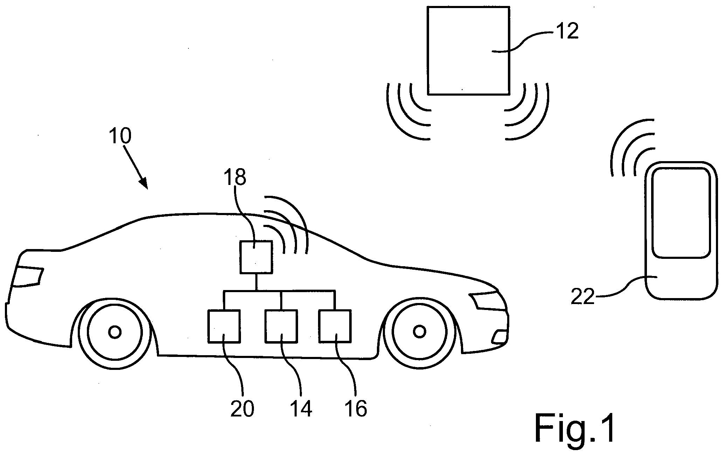

Fig. 1 zeigt eine schematische Darstellung eines Kraftfahrzeugs 10 gemäß einem Ausführungsbeispiel der Erfindung zum Bereitstellen einer Positionsinformation an einer zentralen Datenverarbeitungseinrichtung 12. Zum Bereitstellen der Positionsinformation weist das Kraftfahrzeug 10 eine Positionsbestimmungseinrichtung 14, wie z.B. einen GPS-Empfänger, auf. Der GPS-Empfänger kann dabei auch Teil eines Navigationsgeräts sein. Solange ein ausreichender GPS-Empfang bereitgestellt ist, kann in periodischen Abständen oder auf Veranlassung hin oder durch ein vorbestimmtes Ereignis eine Positionsinformation, z.B. in Form von Geokoordinaten, durch die Positionsbestimmungseinrichtung 14 im Kraftfahrzeug 10 bereitgestellt werden. Des Weiteren weist das Kraftfahrzeug 10 eine Detektionseinrichtung 16 auf, die dazu ausgelegt ist, ein Einfahren des Kraftfahrzeugs 10 in ein Parkhaus zu detektieren. Wenn die Detektionseinrichtung 16 das Einfahren des Kraftfahrzeugs 10 in ein Parkhaus detektiert, sendet eine Kommunikationseinrichtung 18 des Kraftfahrzeugs 10 die durch die Positionsbestimmungseinrichtung 14 bereitgestellte aktuelle Position an eine zentrale Datenverarbeitungseinrichtung 12. Das Senden der Positionsinformation an die zentrale Datenverarbeitungseinrichtung 12 kann dabei beispielsweise über Internet, insbesondere WLAN erfolgen. Dabei ist die Kommunikationseinrichtung 18 dazu ausgelegt, eine Kommunikationsverbindung, insbesondere eine Internetverbindung, zur zentralen Datenverarbeitungseinrichtung 12 aufzubauen. Weiterhin kann beispielsweise eine Adresse der zentralen Datenverarbeitungseinrichtung 12 im Kraftfahrzeug 10, z.B. in einem Speicher abgelegt, bereitgestellt sein. Dann kann die Kommunikationseinrichtung 18 auf die Adresse zugreifen und die Geo-Koordinaten an die zentrale Datenverarbeitungseinrichtung 12 senden. Dabei ist die Kommunikationseinrichtung 18 weiterhin dazu ausgelegt, das Senden der Geo-Koordinaten unmittelbar nach der Detektion des Einfahrens in das Parkhaus zu senden, so dass sich das Kraftfahrzeug 10 während des Sendens der Geo-Koordinaten noch in einem Einfahrtsbereich oder Eingangsbereich des Parkhauses befindet und somit die Wahrscheinlichkeit groß ist, dass die Übermittlung der Geo-Koordinaten an die zentrale Datenverarbeitungseinrichtung 12 erfolgreich ist. Auch die Bestimmung der Position durch die Positionsbestimmungseinrichtung 14 erfolgt spätestens unmittelbar nach der Detektion des Einfahrens in ein Parkhaus. Somit kann die Positionsinformation als Geo-Koordinaten möglichst zuverlässig an einer zentralen Datenverarbeitungseinrichtung 12 bereitgestellt, gespeichert und von einem Benutzer zu jedem beliebigen Zeitpunkt abgerufen werden.

Das Kraftfahrzeug 10 umfasst weiterhin eine Aus- und Eingabeeinrichtung 20. Diese ist dazu ausgelegt, infolge einer Detektion eines Einfahrens in ein Parkhaus eine Eingabeaufforderung zum Eingeben einer weiteren Positionsinformation, wie z.B. eine Parkebene und/oder eine Stellplatznummer, an den Benutzer auszugeben. Die Eingabeaufforderung kann dabei über einen Sprachdialog oder durch ein Popup im Fahrzeug-MMI erfolgen. Der Benutzer kann daraufhin, insbesondere nach Parken des Kraftfahrzeugs 10, mittels der Eingabeeinrichtung 20 die Parkebene und/oder die Stellplatznummer eingeben. Ist eine Eingabe durch den Benutzer erfolgt, sendet die Kommunikationseinrichtung 18 wiederum diese weitere Positionsinformation an die zentrale Datenverarbeitungseinrichtung 12. Für den Fall, dass empfangsbedingt ein Übermitteln der weiteren Positionsinformation möglich ist, kann so auch die weitere Positionsinformation an der zentralen Datenverarbeitungseinrichtung 12 bereitgestellt, gespeichert und von einem Benutzer zu jedem beliebigen Zeitpunkt abgerufen werden.

Zum Abrufen von der zentralen Datenverarbeitungseinrichtung 12 gespeicherten Positionsinformationen kann auf vorteilhafte Weise jede Art von Gerät verwendet werden, das zu einer Kommunikation mit der zentralen Datenverarbeitungseinrichtung 12 befähigt ist. Beispielsweise kann ein Benutzer sein Handy oder Smartphone verwenden, und falls ein solches nicht vorhanden ist, kann er auch die Positionsinformationen von einem anderen mobilen Kommunikationsgerät abrufen oder auch von zu Hause aus von einem Heimcomputer oder einem Laptop, PDA, Tablet PC, usw..

Steht dem Benutzer ein mobiles Kommunikationsgerät 22 zur Verfügung, so kann auch dies auf vorteilhafte Weise in das Verfahren mit einbezogen werden, um die Bereitstellung der Positionsinformationen noch zuverlässiger zu gestalten. Da in einem Parkhaus empfangsbedingt nicht immer gewährleistet werden kann, dass ein Übermitteln der vom Benutzer eingegebenen Parkebene oder Stellplatznummer erfolgreich ist, so ist bevorzugt ein mobiles Kommunikationsgerät 22 dazu ausgelegt, nach einem Auslöseereignis eine Kommunikationsvermindung mit der zentralen Datenverarbeitungseinrichtung 12 aufzubauen und von dieser abzufragen, ob die Positionsinformationen, d.h. die Geo-Koordinaten oder die Parkebene und Stellplatznummer erfolgreich übermittelt und gespeichert wurden. Das Auslöseereignis kann dabei z.B. das Trennen einer Kommunikationsverbindung zwischen dem mobilen Kommunikationsgerät 22 und dem Kraftfahrzeug 10 sein, z.B. das Entkoppeln von einer Freisprecheinrichtung. Beispielsweise erkennt das mobile Kommunikationsgerät 22 auch, wenn die Verbindung zum fahrzeugseitigen WLAN getrennt wird, was insbesondere der Fall ist, wenn die Zündung des Kraftfahrzeugs 10 ausgeschaltet wird. Dieses Erkennen kann ebenfalls als Auslöseereignis dienen. Dazu ist es erforderlich, dass vorher in irgendeiner Weise eine kommunikative Kopplung des mobilen Kommunikationsgeräts 22 mit dem Kraftfahrzeug 10 bestanden hat bzw. das mobile Kommunikationsgerät 22 mit dem kraftfahrzeugseitigen WLAN verbunden war, bevorzugt bereits vor dem Einfahren in ein Parkhaus bzw. vor der Detektion eines Einfahrens in ein Parkhaus. Über diese Verbindung kann dem mobilen Kommunikationsgerät 22 auch die Information, dass ein Einfahren in ein Parkhaus detektiert wurde, übermittelt werden, so das vorteilhafterweise nur dann versucht wird, die Positionsinformationen von der zentralen Datenverarbeitungseinrichtung 12 abzufragen, wenn das Kraftfahrzeug 10 auch in ein Parkhaus eingefahren ist. Die Kommunikationsverbindung zwischen dem mobilen Kommunikationsgerät 22 und der zentralen Datenverarbeitungseinrichtung 12 kann weiterhin als Mobilfunkverbindung, Telekommunikationsverbindung oder auch über WLAN erfolgen.

Dabei baut das mobile Kommunikationsgerät 22 die Kommunikationsverbindung zur zentralen Datenverarbeitungseinrichtung 12 auf, sobald dies möglich ist, d.h. sobald ein entsprechendes Mobilfunknetz oder WLAN-Empfang zur Verfügung steht. Das mobile Kommunikationsgerät 22 kann dazu wiederholt versuchen die Kommunikationsverbindung aufzubauen bis dies schließlich erfolgreich ist oder nach einer vorgebbaren Zeitdauer oder Anzahl an erfolglosen Verbindungsversuchen abgebrochen wird. Jedoch selbst wenn im einem Parkhaus schlechter oder gar kein Empfang bereitsteht, so ist üblicherweise spätestens beim Verlassen des Parkhauses durch den Benutzer mit dem mobilen Kommunikationsgerät 22 der Aufbau einer Kommunikationsverbindung mit der zentralen Datenverarbeitungseinrichtung 12 möglich.

Stellt das mobile Kommunikationsgerät 22 schließlich bei dieser Abfrage fest, dass z.B. die Parkebene und die Stellplatznummer nicht auf der zentralen Datenverarbeitungseinrichtung 12 vorliegen, so gibt das mobile Kommunikationsgerät 22 eine Eingabeaufforderung zum Eingeben der weiteren Positionsinformationen, wie der Parkebene und der Stellplatznummer, an den Benutzer aus. Somit steht dem Benutzer erneut die Möglichkeit bereit, diese Daten einzugeben. Die eingegebenen Positionsinformationen können daraufhin wiederum vom mobilen Kommunikationsgerät 22 an die zentrale Datenverarbeitungseinrichtung 12 gesendet und von dieser abgespeichert werden. Die Daten können auch im mobilen Kommunikationsgerät 22 selbst gespeichert werden, jedoch ist das Speichern durch eine zentrale Datenverarbeitungseinrichtung 12 besonders vorteilhaft, da so die Daten jederzeit von einem beliebigen Gerät, wie z.B. einem anderen mobilen Kommunikationsgerät 22, internetfähigen Computer, usw. abgerufen werden können.

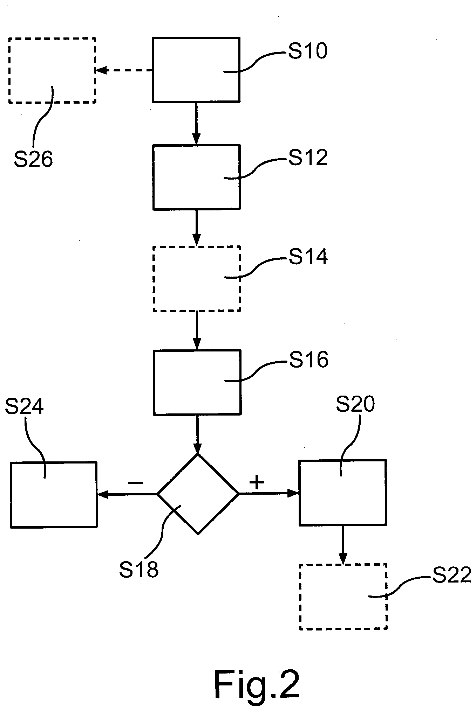

Fig. 2 zeigt eine schematische Darstellung eines Ablaufdiagramms zur Veranschaulichung von Verfahrensschritten gemäß einem Ausführungsbeispiel der Erfindung. Insbesondere sind hierbei vor Allem die vom Kraftfahrzeug 10 durchgeführten Verfahrensschritte zur Bereitstellung einer Positionsinformation veranschaulicht. Das Verfahren beginnt hierbei in Schritt S10, in welchem durch eine Detektionseinrichtung 16 des Kraftfahrzeugs 10 ein Einfahren des Kraftfahrzeugs 10 in ein Parkhaus detektiert wird. Daraufhin sendet das Kraftfahrzeug 10 in Schritt S12 mindestens eine erste aktuelle Positionsinformation an die zentrale Datenverarbeitungseinrichtung 12. Die Positionsinformation kann dabei in Form von Geo-Koordinaten und/oder GPS-Koordinaten vorliegen und durch einen GPS-Empfänger oder eine andere Positionsbestimmungseinrichtung 14 des Kraftfahrzeugs 10 bereitgestellt worden sein. Die Ermittlung der Positionsinformation durch das Kraftfahrzeug 10 kann dabei unabhängig von der Durchführung des Verfahrens wiederholt in periodischen Abständen ermittelt werden, z.B. zum Zwecke der Navigation. Nach einem Detektieren des Einfahrens in ein Parkhaus kann dann die aktuell vorliegende Positionsinformation an die zentrale Datenverarbeitungseinrichtung 12 gesendet werden. Alternativ kann die aktuelle Position auch erst durch das Kraftfahrzeug 10 bestimmt werden, wenn ein Einfahren in ein Parkhaus detektiert wurde. Insbesondere wird dabei die Position unmittelbar nach dem Detektieren des Einfahrens ermittelt bzw. die Detektion des Einfahrens kann gleichzeitig auch den Ermittlungsvorgang auslösen. Damit ist es sehr Wahrscheinlich, dass die Position des Kraftfahrzeugs 10 erfolgreich ermittelt werden kann, da am Eingang eines Parkhauses noch ein guter GPS-Empfang bereitsteht. Gleiches gilt auch für das Senden der ersten Positionsinformation an die zentrale Datenverarbeitungseinrichtung 12. Auch dies erfolgt unmittelbar nach der Detektion des Einfahrens ins das Parkhaus bzw. unmittelbar nach dem Erfassen der aktuellen Positionsinformation durch das Kraftfahrzeug 10, falls die Positionsinformation noch nicht im Kraftfahrzeug 10 vorliegt.

Wird die erste Positionsinformation von der zentralen Datenverarbeitungseinrichtung 12 empfangen, so wird die erste Positionsinformation dann im optionalen Schritt S14 von der zentralen Dateneinrichtung gespeichert. Dieser Schritt S14 ist dahingehend optional, als die erste Positionsinformation von der zentralen Datenverarbeitungseinrichtung 12 nicht gespeichert werden kann, wenn die erste Positionsinformation nicht empfangen wurde.

Im nächsten Schritt S16 wird dann vom Kraftfahrzeug 10 eine Eingabeaufforderung zur Eingabe mindestens einer zweiten Positionsinformation, insbesondere einer Parkebenen und/oder einer Stellplatznummer, an den Benutzer ausgegeben. Im nächsten Schritt S18 wird geprüft, ob der Benutzer die zweite Positionsinformation eingegeben hat. Ist dies der Fall, so wird in einem weiteren Schritt S20 die eingegebene zweite Positionsinformation an die zentrale Datenverarbeitungseinrichtung 12 gesendet und im optionalen Schritt S22 die zweite Positionsinformation von der zentralen Datenverarbeitungseinrichtung 12 gespeichert. Optional heißt hierbei wiederum nur für den Fall, dass die zweite Positionsinformation auch von der zentralen Datenverarbeitungseinrichtung 12 empfangen wurde.

Wird dagegen in Schritt S18 festgestellt, dass keine Eingabe durch einen Benutzer die zweite Positionsinformation betreffend getätigt wurde, so kann die zweite Positionsinformation auch nicht an die zentrale Datenverarbeitungseinrichtung 12 übermittelt werden und das Verfahren wird fahrzeugseitig in Schritt S24 beendet.

Sofern alle Positionsinformationen erfolgreich an die zentrale Datenverarbeitungseinrichtung 12 übermittelt werden könnten, stehen diese Informationen einem Benutzer jederzeit zum Abrufen bereit ohne dabei zwingend auf das Mitführen eines mobilen Kommunikationsgeräts 22 angewiesen zu sein. Die Einbindung eines mobilen Kommunikationsgeräts 22 in dieses Verfahren hat jedoch gerade beim Parken in einem Parkhaus besonders große Vorteile, da nicht immer ein ausreichender Empfang gewährleistet ist. Dies soll anhand der weiteren Verfahrensschritte in Fig. 2 veranschaulicht werden.

Fig. 2 zeigt eine schematische Darstellung eines Ablaufdiagramms zur Veranschaulichung von weiteren Verfahrensschritten gemäß einem Ausführungsbeispiel der Erfindung. Dabei wird in Schritt S30 vom mobilen Kommunikationsgerät 22 ein Auslöseereignis erkannt. Dieses kann, wie bereits beschreiben, beispielsweise das Trennen einer Verbindung des mobilen Kommunikationsgeräts 22 vom fahrzeugseitigen WLAN sein. Da die folgenden Verfahrensschritte jedoch vor allem bei einem Parken in einem Parkhaus sinnvoll sind, kann es auch vorgesehen sein, zusätzlich zum Auslöseereignis eine weitere Bedingung zur Initiierung der weiteren Verfahrensschritte vorzusehen, wie beispielsweise die Detektion des Einfahrens des Kraftfahrzeugs 10 in ein Parkhaus. Wenn dies beispielsweise, wie zu Fig. 1 beschrieben in Schritt S10 detektiert wird, kann diese Detektionsinformation in einem Schritt S26 vom Kraftfahrzeug 10, z.B. durch das fahrzeugseitige WLAN, an das mobile Kommunikationsgerät 22 übermittelt werden.

Wenn also das mobile Kommunikationsgerät 22 das Auslöseereignis detektiert, stellt dieses in Schritt S32 eine Kommunikationsverbindung, z.B. über Mobilfunk, zur zentralen Datenverarbeitungseinrichtung 12 her, entweder sofort oder zumindest sobald ein ausreichender Empfang bereitsteht, um diese Verbindung aufzubauen. In Schritt S34 überprüft das mobile Kommunikationsgerät 22, ob die zuvor an die zentrale Datenverarbeitungseinrichtung 12 gesendeten Positionsinformationen durch diese empfangen und gespeichert wurden. Ist dies der Fall, so ist in Schritt S36 das Verfahren beendet und alle Positionsinformationen stehen sicher dem Benutzer zum Abrufen bereit.

Ist dies jedoch nicht der Fall, so kann in Schritt S38 das mobile Kommunikationsgerät 22 eine weitere Eingabeaufforderung an den Benutzer ausgeben. So wird der Benutzer automatisch darauf aufmerksam gemacht, dass nicht alle Positionsinformationen gespeichert werden konnten. Der Benutzer kann nun erneut z.B. die Parkebenen und die Stellplatznummer eingeben. In Schritt S40 wird dann vom mobilen Kommunikationsgerät 22 überprüft, ob eine Eingabe erfolgt ist, und falls dies der Fall ist, so sendet das mobile Kommunikationsgerät 22 die eingegebenen Positionsinformationen in Schritt S42 an die zentrale Datenverarbeitungseinrichtung 12. Hierbei ist mit sehr hoher Wahrscheinlichkeit davon auszugehen, dass die Übermittlung dieser Informationen an die zentrale Datenverarbeitungseinrichtung 12 erfolgreich ist, so dass in Schritt S44 die übermittelten Positionsinformationen von der zentralen Datenverarbeitungseinrichtung 12 gespeichert werden können. Alternativ zur einer erneuten Benutzereingabe mittels des mobilen Kommunikationsgeräts 22 kann es auch vorgehen sein, dass, wenn der Benutzer im Kraftfahrzeug 10 eine Eingabe tätigt, die eingegebenen Positionsinformationen automatisch auch an das mobile Kommunikationsgerät 22 übermittelt werden. Wird dann bei der Überprüfung in Schritt S34 festgestellt, dass diese Positionsinformationen nicht auf der zentralen Datenverarbeitungseinrichtung 12 gespeichert wurden, so kann das mobile Kommunikationsgerät 22 automatisch diese Positionsinformationen an die zentrale Datenverarbeitungseinrichtung 12 senden.

Durch dieses Verfahren, insbesondere durch die Speicherung der Positionsinformationen auf einer zentralen, fahrzeugexternen Datenverarbeitungseinrichtung, wird es somit auf vorteilhafte Weise ermöglicht, dass Positionsinformationen universell abruffähig bereitgestellt werden können und zwar ohne die zwingende Erfordernis eines Mitführens eines Handys zum Zeitpunkt des Parkens. Somit ist die Funktion nicht von einem Handy oder Smartphone abhängig. Der Benutzer kann seine Parkinformationen auch im Fahrzeug eingeben und später jederzeit im Kundenportal von einem beliebigen internetfähigen Endgerät einsehen.

Des Weiteren muss der Benutzer nicht manuell die Funktion starten, sondern wird vom Fahrzeug - und in zweiter Instanz vom mobilen Kommunikationsgerät - automatisch darauf hingewiesen.

Zudem kann durch die hybride Ausgestaltung des Verfahrens, bei der die Funktionen des Kraftfahrzeugs und des mobilen Kommunikationsgeräts genutzt werden, eine ganz besonders zuverlässige Bereitstellung der Positionsinformationen über das geparkte Kraftfahrzeug, insbesondere sogar dessen genaue Position mit Parkebene und Stellplatznummer, ermöglicht werden, was besonders beim Parken in Parkhäusern von großem Vorteil ist.

## Patentansprüche

1. Verfahren zum Bereitstellen von mindestens einer Positionsinformation über ein geparktes Kraftfahrzeug (10), wobei das Kraftfahrzeug (10) eine Kommunikationseinrichtung (18) und eine Positionsbestimmungseinrichtung (14) aufweist, mit den Schritten:
a1) Detektieren eines Einfahrens des Kraftfahrzeugs (10) in ein Parkhaus (S10) durch eine Detektionseinrichtung (16) des Kraftfahrzeugs (10); und
a2) Ermitteln mindestens einer aktuellen ersten Positionsinformation des Kraftfahrzeugs (10) als Geo-Koordinaten und/oder GPS-Koordinaten durch die Positionsbestimmungseinrichtung (14) des Kraftfahrzeugs (10);
b) **gekennzeichnet durch** die Schritte: durch das Detektieren des Einfahrens (S10) Auslösen eines Sendens (S12) der mindestens einen von der Positionsbestimmungseinrichtung (14) des Kraftfahrzeugs (10) bereitgestellten, aktuellen ersten Positionsinformation durch die Kommunikationseinrichtung (18) des Kraftfahrzeugs (10) an eine fahrzeugexterne Datenverarbeitungseinrichtung (12); und
c) im Falle eines Empfangens der ersten Positionsinformation durch die Datenverarbeitungseinrichtung (12), Speichern (S14) der mindestens einen ersten Positionsinformation durch die Datenverarbeitungseinrichtung (12).

2. Verfahren nach Anspruch 1,
**gekennzeichnet durch** den weiteren Schritt:
d) Ausgeben einer Eingabeaufforderung (S16) zum Eingeben mindestens einer zweiten Positionsinformation durch das Kraftfahrzeug (10) an einen Benutzer.

3. Verfahren nach Anspruch 2,
**gekennzeichnet durch** den weiteren Schritt:
e) Falls nach Schritt d) von einem Benutzer die mindestens eine zweite Positionsinformation eingegeben wird, Senden (S20) der mindestens einen zweiten Positionsinformation an die Datenverarbeitungseinrichtung (12).

4. Verfahren nach Anspruch 3,
**gekennzeichnet durch** den weiteren Schritt:
f) Falls von der Datenverarbeitungseinrichtung (12) die mindestens eine zweite Positionsinformation empfangen wird, Speichern (S22) der mindestens einen zweiten Positionsinformation durch die Datenverarbeitungseinrichtung (12).

5. Verfahren nach einem der vorhergehenden Ansprüche,
**gekennzeichnet durch** den weiteren Schritt:
g) Falls von einem mobilen Kommunikationsgerät (22) ein Auslöseereignis detektiert wird (S30), Herstellen einer kommunikativen Verbindung (S32) durch das mobile Kommunikationsgerät (22) zur Datenverarbeitungseinrichtung (12).

6. Verfahren nach Anspruch 5,
**gekennzeichnet durch** den weiteren Schritt:
h) Überprüfen (S34) durch das mobile Kommunikationsgerät (22), ob die erste und die zumindest eine zweite Positionsinformation von der Datenverarbeitungseinrichtung (12) gespeichert wurden, indem das mobile Kommunikationsgerät (22) nach dem Auslöseereignis die kommunikative Verbindung zur Datenverarbeitungseinrichtung (12) aufbaut und von der Datenverarbeitungseinrichtung (12) abfragt, ob die erste und die zweite Positionsinformation übermittelt und von der Datenverarbeitungseinrichtung (12) gespeichert wurden.

7. Verfahren nach Anspruch 6,
**gekennzeichnet durch** den weiteren Schritt:
i) Falls in Schritt h) durch das mobile Kommunikationsgerät (22) festegestellt wird, dass zumindest die mindestens eine zweite Positionsinformation nicht von der Datenverarbeitungseinrichtung (12) gespeichert wurde, Ausgeben einer Eingabeaufforderung (S38) zum Eingeben der mindestens einen zweiten Positionsinformation durch das mobile Kommunikationsgerät (22) an den Benutzer.

8. Verfahren nach Anspruch 7,
**gekennzeichnet durch** den weiteren Schritt:
j) Falls nach Schritt i) durch den Benutzer die mindestens eine zweiten Positionsinformation eingegeben wird, Senden der mindestens einen zweiten Positionsinformation (S42) durch das mobile Kommunikationsgerät (22) an die Datenverarbeitungseinrichtung (12).

9. Verfahren nach Anspruch 6,
**gekennzeichnet durch** die weiteren Schritte:
k) Falls nach Schritt d) von einem Benutzer die mindestens eine zweite Positionsinformation eingegeben wird, Übermitteln der mindestens einen zweiten Positionsinformation durch das Kraftfahrzeug (10) an das mobile Kommunikationsgerät (22); und
I) Falls in Schritt h) durch das mobile Kommunikationsgerät (22) festgestellt wird, dass zumindest die mindestens eine zweite Positionsinformation nicht von der Datenverarbeitungseinrichtung (12) gespeichert wurde, Senden der an das mobile Kommunikationsgerät (22) übermittelten mindestens einen zweiten Positionsinformation durch das mobile Kommunikationsgerät (22) an die Datenverarbeitungseinrichtung (12).

10. Kraftfahrzeug (10) mit
- einer Positionsbestimmungseinrichtung (14), die dazu ausgelegt ist, eine aktuelle erste Positionsinformation des Kraftfahrzeugs (10) als Geo-Koordinaten und/oder GPS-Koordinaten zu bestimmen,
- einer Detektionseinrichtung (16), die dazu ausgelegt ist, ein Einfahren des Kraftfahrzeugs (10) in ein Parkhaus zu detektieren,
- einer Kommunikationseinrichtung (18),
wobei die Kommunikationseinrichtung (18) mit der Detektionseinrichtung (16) und der Positionsbestimmungseinrichtung (14) gekoppelt ist und dazu ausgelegt ist, eine kommunikative Verbindung zu einer fahrzeugexternen Datenverarbeitungseinrichtung (12) herzustellen, **dadurch gekennzeichnet, dass**
die Kommunikationseinrichtung dazu ausgelegt ist bei einer Detektion eines Einfahrens des Kraftfahrzeugs (10) in ein Parkhaus durch die Detektionseinrichtung ein Senden der aktuellen ersten Positionsinformation an die Datenverarbeitungseinrichtung (12) zu veranlassen.

## Claims

1. Method for providing at least one piece of position information about a parked motor vehicle (10), wherein the motor vehicle (10) comprises a communication device (18) and a position-determining device (14), comprising the steps:
a1) detecting, with a detection device (16) of the motor vehicle (10), the entry of the motor vehicle (10) into a parking garage (S10); and
a2) determining, with the position-determining device (14) of the motor vehicle (10), at least one current first piece of position information of the motor vehicle (10) as geo-coordinates and/or GPS coordinates;
b) **characterised by** the steps: upon detecting the entry (S10) triggering transmission (S12) of the at least one current first piece of position information provided by the position-determining device (14) of the motor vehicle (10) to a vehicle-external central data processing device (12) via the communication device (18) of the motor vehicle (10); and
c) upon receipt of the first piece of position information by the central data processing device (12), saving (S14) the at least one first piece of position information by the central data processing device (12).

2. Method according to claim 1,
**characterised by** the additional step:
d) the motor vehicle (10) outputs to a user a prompt (S16) to enter at least one second piece of position information.

3. Method according to claim 2,
**characterised by** the additional step:
e) when, after step d), the at least one second piece of position information has been entered by a user, sending (S20) the at least one second piece of position information to the data processing device (12).

4. Method according to claim 3,
**characterised by** the additional step:
f) when the data processing device (12) has received the at least one second piece of position information, the data processing device (12) saves (S22) the at least one second piece of position information.

5. Method according to any of the preceding claims,
**characterised by** the additional step:
g) when a trigger event is detected (S30) by a mobile communication device (22), a communication link (S32) to the data processing device (12) is established by the mobile communication device (22).

6. Method according to claim 5,
**characterised by** the additional step:
h) checking (S34) by means of the mobile communication device (22), whether the first and the at least one second piece of position information have been saved by the data processing device (12), by establishing with the mobile communication device (22) after the trigger event the communication link to the data processing device (12) and querying the central data processing device (12) as to whether the first and the second piece of position information have been transmitted and saved by the data processing device (12).

7. Method according to claim 6,
**characterised by** the additional step:
i) when it has been determined by the mobile communication device (22) in step h) that at least the at least one second piece of position information has not been saved by the data processing device (12), outputting via the mobile communication device (22) to the user a prompt to input (S38) the at least one second piece of position information.

8. Method according to claim 7,
**characterised by** the additional step:
j) when, after step i), the at least one second piece of position information has been input by the user, transmitting via the mobile communication device (22) the at least one second piece of position information (S42) to the data processing device (12).

9. Method according to claim 6,
**characterised by** the additional steps:
k) when, after step d), the user has entered the at least one second piece of position information, the motor vehicle (10) transmits the at least one second piece of position information to the mobile communication device (22); and
I) when, in step h), it has been determined by the mobile communication device (22) that at least the at least one second piece of position information has not been saved by the data processing device (12), transmitting to the central data processing device (12) via the mobile communication device (22) the at least one second piece of position information transmitted to the mobile communication device (22).

10. Motor vehicle (10) comprising
- a position-determining device (14) configured to determine a current first piece of position information of the motor vehicle (10) as geo-coordinates and/or GPS coordinates,
- a detection device (16) which is configured to detect the entry of the motor vehicle (10) into a parking garage,
- a communication device (18),
wherein the communication device (18) is coupled to the detection device (16) and the position-determining device (14) and is configured to establish a communication link to a vehicle-external data processing device (12),
**characterised in that**
the communication device is configured to initiate, upon detection of the entry of the motor vehicle (10) into a parking garage by the detection device, the transmission of the current first piece of position information to the data processing device (12).

## Revendications

1. Procédé destiné à fournir au moins une information de position concernant un véhicule automobile (10) en stationnement, le véhicule automobile (10) comportant un dispositif de communication (18) et un dispositif de détermination de position (14), avec les étapes :
a1) détection de l'entrée du véhicule automobile (10) dans un parking (S10) par un dispositif de détection (16) du véhicule automobile (10) ; et
a2) détermination d'au moins une première information de position actuelle du véhicule automobile (10) sous forme de coordonnées géographiques et/ou de coordonnées GPS par le dispositif de détermination de position (14) du véhicule automobile (10) ;
b) **caractérisé par** les étapes : par la détection de l'entrée (S10), déclenchement d'une émission (S12) de l'au moins une première information de position actuelle, fournie par le dispositif de détermination de position (14) du véhicule automobile (10), par le dispositif de communication (18) du véhicule automobile (10) vers un dispositif de traitement de données (12) extérieur au véhicule ; et
c) dans le cas d'une réception de la première information de position par le dispositif de traitement de données (12), mémorisation (S14) de l'au moins une première information de position par le dispositif de traitement de données (12).

2. Procédé selon la revendication 1, **caractérisé par** l'autre étape :
d) fourniture d'une invitation à effectuer une entrée (S16) à un utilisateur par le véhicule automobile (10) dans le but d'entrer au moins une deuxième information de position.

3. Procédé selon la revendication 2, **caractérisé par** l'autre étape :
e) si l'au moins une deuxième information de position est entrée par l'utilisateur après l'étape d), émission (S20) de l'au moins une deuxième information de position vers le dispositif de traitement de données (12).

4. Procédé selon la revendication 3, **caractérisé par** l'autre étape :
f) si l'au moins une deuxième information de position est reçue par le dispositif de traitement de données (12), mémorisation (S22) de l'au moins une deuxième information de position par le dispositif de traitement de données (12).

5. Procédé selon l'une quelconque des revendications précédentes, **caractérisé par** l'autre étape :
g) si un événement de déclenchement est détecté (S30) par un appareil de communication mobile (22), établissement d'une liaison de communication (S32) par l'appareil de communication mobile (22) vers le dispositif de traitement de données (12).

6. Procédé selon la revendication 5, **caractérisé par** l'autre étape :
h) vérification (S34) par l'appareil de communication mobile (22) si la première information de position et l'au moins une deuxième information de position ont été mémorisées par le dispositif de traitement de données (12), par le fait que l'appareil de communication mobile (22) établit après l'événement de déclenchement la liaison de communication vers le dispositif de traitement de données (12) et qu'il interroge le dispositif de traitement de données (12) pour savoir si la première et la deuxième information de position ont été transmises et mémorisées par le dispositif de traitement de données (12).

7. Procédé selon la revendication 6, **caractérisé par** l'autre étape :
i) s'il a été constaté par l'appareil de communication mobile (22) à l'étape h) qu'au moins l'au moins une deuxième information de position n'a pas été mémorisée par le dispositif de traitement de données (12), fourniture d'une invitation à effectuer une entrée (S38) à l'utilisateur par l'appareil de communication mobile (22) dans le but d'entrer l'au moins une deuxième information de position.

8. Procédé selon la revendication 7, **caractérisé par** l'autre étape :
j) si l'au moins une deuxième information de position est entrée par l'utilisateur après l'étape i), émission de l'au moins une deuxième information de position (S42) par l'appareil de communication mobile (22) vers le dispositif de traitement de données (12).

9. Procédé selon la revendication 6, **caractérisé par** les autres étapes :
k) si l'au moins une deuxième information de position est entrée par un utilisateur après l'étape d), transmission de l'au moins une deuxième information de position par le véhicule automobile (10) à l'appareil de communication mobile (22) ; et
l) s'il a été constaté par l'appareil de communication mobile (22) à l'étape h) qu'au moins l'au moins une deuxième information de position n'a pas été mémorisée par le dispositif de traitement de données (12), émission de l'au moins une deuxième information de position transmise à l'appareil de communication mobile (22), par l'appareil de communication mobile (22), au dispositif de traitement de données (12).

10. Véhicule automobile (10) avec
- un dispositif de détermination de position (14), qui est conçu pour déterminer une première information de position actuelle du véhicule automobile (10) sous forme de coordonnées géographiques et/ou de coordonnées GPS,
- un dispositif de détection (16) qui est conçu pour détecter l'entrée du véhicule automobile (10) dans un parking,
- un dispositif de communication (18),
dans lequel le dispositif de communication (18) est couplé au dispositif de détection (16) et au dispositif de détermination de position (14) et est conçu pour établir une liaison de communication vers un dispositif de traitement de données (12) extérieur au véhicule,
**caractérisé en ce que** le dispositif de communication est conçu pour, lors d'une détection de l'entrée du véhicule automobile (10) dans un parking par le dispositif de détection, provoquer une émission de la première information de position actuelle vers le dispositif de traitement de données (12).
